# EUROPÄISCHE PATENTSCHRIFT

(11) **EP 4 594 699 B1**
(45) Veröffentlichungstag und Bekanntmachung des Hinweises auf die Patenterteilung: **16.09.2026**
(21) Anmeldenummer: 23782462.8
(22) Anmeldetag: 26.09.2023
(51) Int. Cl.: G01B 5/00, G01B 11/16, G01B 11/27, G01B 11/30

(54) **VERFAHREN UND MESSSTATION ZUM BESTIMMEN DER GERADHEIT VON STABLEITERN**
METHOD AND MEASURING STATION FOR DETERMINING THE STRAIGHTNESS OF BAR CONDUCTORS
PROCÉDÉ ET STATION DE MESURE POUR LA DÉTERMINATION DE LA RECTITUDE DE BARRES CONDUCTRICES

(30) Priorität: 28.09.2022 DE 102022210294
(43) Veröffentlichungstag der Anmeldung: 06.08.2025
(73) Patentinhaber: FELSOMAT GmbH & Co. KG, 75203 Königsbach-Stein (DE)
(72) Erfinder: PESCHINA, Jürgen, 75438 Knittlingen (DE); SORG, Robin, 74357 Bönnigheim (DE)
(74) Vertreter: Kohler Schmid Möbus Patentanwälte
(86) Internationale Anmeldenummer: PCT/EP2023/076596
(87) Internationale Veröffentlichungsnummer: WO 2024/068665

(56) Entgegenhaltungen:
- EP-A1- 1 944 570
- CN-A- 111 895 905
- DE-C1- 19 503 850

## Beschreibung

### Hintergrund der Erfindung

Die Erfindung betrifft ein Verfahren und eine Messstation zum Bestimmen der Geradheit von Stableitern mit einer ersten und einer zweiten Flachseite, die einander gegenüberliegen.

Elektrische Maschinen, z. B. Elektromotoren, weisen verbreitet einen Stator mit einer sogenannten Spulenwicklung auf. Traditionell wird die Spulenwicklung durch Aufwickeln eines Drahtes hergestellt. Solche Wickelverfahren sind jedoch technisch sehr aufwendig und unterliegen technischen Einschränkungen. Zudem ist der Füllungsgrad (Flächenanteil des Drahtes in einem überwickelten Querschnitt) bei gewickelten Spulen begrenzt.

Spulen von Statoren elektrischer Maschinen können alternativ auch durch miteinander verbundene Stableiter, die in einen Grundkörper des Stators eingesteckt sind, ausgebildet sein. Insbesondere im Bereich elektromotorisch angetriebener Kraftfahrzeuge werden zunehmend Elektromotoren mit Statoren mit Stableitern eingesetzt. Diese Stableiter sind typischerweise zumindest abschnittsweise gerade. Häufig weisen die Stableiter einen Rechteckquerschnitt auf, wodurch ein besonders hoher Füllgrad im Stator erreicht werden kann. Näherungsweise U-förmige Stableiter, sogenannte Hairpins, werden in der Regel durch Biegen gerader Stableiter, sogenannter I-Pins, erhalten. Um die Stableiter in Aufnahmeschächte im Grundkörper einfügen zu können, ist es erforderlich, dass die geraden Abschnitte der Stableiter, insbesondere die beiden Schenkel eines U-förmig gebogenen Stableiters, nur minimale Abweichungen von einer ideal geraden Erstreckung aufweisen. Die erreichbare Geradheit der Schenkel eines U-förmigen Stableiters wird dabei von der Geradheit eines insgesamt geraden (I-förmigen) Stableiters bzw. Stableiter-Rohlings bestimmt, aus welchem der U-förmige Stableiter durch Biegen erhalten wurde.

Stableiter mit einer zu großen Krümmung in den nominell geraden Abschnitten können nicht in den Grundkörper eingesetzt werden, sodass der Fertigungsablauf unterbrochen werden muss. Es ist daher erforderlich, sicherzustellen, dass nur Stableiter mit einem hinreichend exakt geraden Verlauf der beiden Schenkel zum Einsetzen bereitgestellt werden.

Aus EP 1 944 570 B1 ist ein Verfahren zur Messung der Geradheit von gewalzten, stabförmigen Langprodukten, wie Schienen, Trägern, Stäben oder dergleichen, bekannt. Das bekannte Verfahren wird mittels einer Messeinrichtung durchgeführt, deren Messwerte einem Zentralrechner zugeführt werden. Das die Messeinrichtung durchlaufende Langprodukt wird zwischen zwei voneinander beabstandeten, dem Langprodukt Auflager bereitstellenden Bereichen der Messeinrichtung definiert eingespannt, wobei zwischen den Einspannbereichen ein freier Längenabschnitt ohne Abstützung des Langprodukts ausgebildet ist. Die Messeinrichtung besteht aus zwei voneinander beabstandeten Gruppen mit jeweils zwei Rollenpaaren, wobei den unteren Rollen entsprechend obere Rollen zugeordnet sind. Die beiden Rollenpaare bilden die Einspannbereiche für das die Messeinrichtung in Materialflussrichtung kontinuierlich durchlaufende Langprodukt. Das durchlaufende Langprodukt nimmt zwischen den Rollenpaaren bzw. Einspannbereichen eine definierte, ungestützte Einspannlänge ein. In diesem ungestützten Einspannlängenbereich erfährt das Langprodukt aufgrund des Eigengewichts eine Auslenkung, die durch Beaufschlagung mit einer Kraft gezielt mit elastischer Verformung ausgeprägt werden kann. Eine mit ideeller Geradheit über die ungestützte Einspannlänge gelegte Sehne erlaubt es, mit einem geeigneten Messmittel die Auslenkung und die resultierende Kraft zu ermitteln und die Sehne als Funktion von der Auslenkung und der aufgebrachten Kraft zu bestimmen. Die Messwerte werden einem übergeordneten Zentralrechner zugeleitet. Das bekannte Verfahren ermöglicht eine kontinuierliche Kontrolle und Dokumentation der Geradheit eines die Messeinrichtung mit einer hohen Durchlaufgeschwindigkeit durchlaufenden Langprodukts.

Aus EP 0 935 120 A2 ist ein Verfahren zur Bestimmung einer Krümmung von Langgut, insbesondere von gewalzten Trägern, Schienen und dergleichen, bekannt. Das Langgut wird über einen Rollengang mit mehreren Stützrollen geführt. In Abhängigkeit von der Krümmung des Langguts wird auf eine Messrolle des Rollengangs eine Kraft ausgeübt, die gemessen wird. Aus einer Änderung der gemessenen Kraft beim Auf- bzw. Ablaufen des Langguts auf bzw. von einer der Stützrollen kann auf die Krümmung des Langguts geschlossen werden.

Die beiden vorgenannten Verfahren bzw. Vorrichtungen eignen sich insbesondere für stabile Produkte wie Schienen, Träger oder Stäbe, die während der Messung in ihrer Längsrichtung bewegt werden.

DE 195 03 850 C1 beschreibt einen nichtrotierenden Richtapparat für Biegemaschinen mit integrierter Messvorrichtung mit einem nicht rotierenden in wenigstens einer Richtebene arbeitenden Richtwerk für Draht- oder Bandmaterial, mit mehreren, aufeinanderfolgenden, das Material bearbeitenden Richtrollen, die in der Richtebene und quer zur Durchlaufachse des Materials mittels wenigstens eines Stelltriebs einstellbar sind. Im Richtapparat ist in Durchlaufrichtung des Materials hinter dem Richtwerk eine Material-Biegungs-Messvorrichtung vorgesehen, in der eine Messstrecke für einen in der Länge vorbestimmten Materialabschnitt vorgesehen ist. Entlang der Messstrecke ist eine das Ausmaß der Biegung und den Biegungssinn ermittelnde Abtastvorrichtung angeordnet. Innerhalb der Messstrecke können zwei in Durchlaufrichtung beabstandete, stationäre Referenzstützstellen in der Durchlaufachse des Materials und wenigstens eine von beiden Referenzstützstellen beabstandete, vorzugsweise zwischen den Referenzstützstellen liegende, Messstelle vorgesehen sein, wobei die Abtastvorrichtung bei bzw. in der Messstelle angeordnet ist. Das in DE 195 03 850 C1 beschriebene Vorgehen zur Geradheitsprüfung wird an endlosem Draht- oder Bandmaterial durchgeführt.

Aus EP 2 548 668 A1 ist ein Verfahren zum selbsttätigen Torsionsrichten von länglichen Werkstücken und eine Richtmaschine zum Durchführen des Verfahrens bekannt. Die Torsionsrichtmaschine besitzt zwei gegenüberliegende im Abstand zueinander angeordnete Haltevorrichtungen zum Einleiten eines Drehmomentes in das Werkstück und eine Messvorrichtung zum Vermessen des Werkstückes. Dabei kann vor oder nach dem Torsionsrichten auch ein Biegrichten erfolgen. Insbesondere können sowohl wenigstens eine Torsionskorrektur als auch eine Biegekorrektur in der gleichen Richtmaschine durchgeführt werden.

In CN 111895905 A ist ein Verfahren zur Erfassung der Geradheit eines hexagonalen Stabs beschrieben. Dieses Verfahren dient dazu, den durch die Exzentrizität eines pneumatischen Dreibackenfutters verursachten Drehfehler während des Messvorgangs der Geradheit des hexagonalen Stabs zu kompensieren.

JP S57 - 158 507 A beschreibt ein Verfahren und eine Vorrichtung zum Messen der Krümmung von Profilstahl. Der Profilstahl wird auf voneinander beabstandete Auflagen aufgelegt und seine Durchbiegung gemessen, während eine vorbestimmte Last auf den Formstahl aufgebracht wird. Diese Durchbiegung wird mit einer rechnerisch bestimmten Durchbiegung des Formstahls unter seinem Eigengewicht verglichen.

Stableiter für elektrische Maschinen sind häufig sehr empfindlich, sodass sie sich bereits bei geringer Krafteinwirkung dauerhaft verformen. Eine Geradheitsmessung ist dann nicht mehr aussagekräftig. Zudem erfordert die Weiterverarbeitung von Stableitern ein besonders hohes Maß an Geradheit.

### Aufgabe der Erfindung

Es ist eine Aufgabe der Erfindung, ein zuverlässiges und präzises Bestimmen der Geradheit von Stableitern mit einander gegenüberliegenden Flachseiten zu ermöglichen.

### Beschreibung der Erfindung

Diese Aufgabe wird erfindungsgemäß gelöst durch ein Verfahren gemäß Anspruch 1, ein Verfahren gemäß Anspruch 7 und eine Messstation mit den in Anspruch 10 angegebenen Merkmalen. Die jeweiligen Unteransprüche geben vorteilhafte Varianten bzw. Ausführungsformen an.

### Erfindungsgemäßes Verfahren zur Geradheitsbestimmung

Erfindungsgemäß ist ein Verfahren zum Bestimmen der Geradheit von Stableitern mit einer ersten und einer zweiten Flachseite, die einander gegenüberliegen, vorgesehen. Die beiden Flachseiten verlaufen grundsätzlich parallel zueinander. Ein Abstand der ersten von der zweiten Flachseite kann wenigstens 1 mm, insbesondere wenigstens 2 mm, betragen. Der Abstand der ersten von der zweiten Flachseite kann höchstens 8 mm, insbesondere höchstens 6 mm, betragen. Typischerweise besitzen die Stableiter einen rechteckigen Querschnitt. Die Stableiter können aus einer Kupferlegierung bestehen. Die Stableiter können abschnittsweise oder insgesamt beschichtet sein. Die auf Geradheit zu prüfenden Stableiter sind typischerweise gleichartig, insbesondere weisen sie gleiche Längen und Querschnitte auf und bestehen aus dem gleichen Material.

Das Verfahren sieht vor,
- dass die Stableiter jeweils mit der ersten Flachseite auf zwei voneinander beabstandete Auflagen aufgelegt werden und eine erste Durchbiegung des jeweiligen Stableiters zwischen den Auflagen bestimmt wird;
- dass wenigstens ein erster der Stableiter auch mit der zweiten Flachseite auf die Auflagen aufgelegt wird und eine zweite Durchbiegung des ersten Stableiters zwischen den Auflagen bestimmt wird;
- dass eine nominelle Durchbiegung durch einen Mittelwert der ersten und zweiten Durchbiegungen definiert ist;
- und dass für einen jeweiligen Stableiter eine Abweichung der ersten Durchbiegung von der nominellen Durchbiegung als ein Maß für die Geradheit ermittelt wird.

Durch die Bezugnahme auf die nominelle Durchbiegung arbeitet das Verfahren besonders exakt. Die nominelle Durchbiegung entspricht dem Betrag, um welchen sich ein perfekt gerader Stableiter bei Auflage auf den Auflagen durch sein Eigengewicht unter Schwerkrafteinfluss durchbiegen würde. Diese nominelle Durchbiegung würde sich bei dem perfekt geraden Stableiter jeweils unabhängig davon einstellen, ob der Stableiter mit der ersten oder der zweiten Flachseite auf die Auflagen aufgelegt wird. Die Auflagen sind grundsätzlich auf gleichen vertikalen Höhen, d. h. in einer gemeinsamen horizontalen Ebene, angeordnet.

Aufgrund diverser, schwer zu erfassender Einflussfaktoren (beispielsweise Schwankungen des Elastizitätsmoduls, Anisotropien, Dickenvariationen, unterschiedlich dicke Beschichtungen etc.) kann die nominelle Durchbiegung eines perfekt geraden Stableiters im Allgemeinen nicht hinreichend genau mit rechnerischen Verfahren bestimmt werden. Aufgrund der Empfindlichkeit der Stableiter wäre es in der Regel nicht oder nur mit unvertretbarem Aufwand möglich, einen (nahezu) perfekt geraden Stableiter als Kalibrierkörper bereitzustellen. Zudem bestünde die Gefahr, dass sich dieser Kalibrierkörper bei der Handhabung verbiegt, da er ebenso empfindlich ist wie die Stableiter, und somit unbrauchbar würde.

Durch die Mittelwertbildung erfolgt erfindungsgemäß eine Kalibrierung, ohne dass ein perfekt gerader Stableiter benötigt wird. Eine vorhandene Krümmung des wenigstens einen ersten Stableiters wird durch das Bestimmen der Durchbiegungen in den beiden Ausrichtungen bei der Mittelwertbildung kompensiert. Die nominelle Durchbiegung kann explizit als der Mittelwert der ersten und zweiten Durchbiegungen ermittelt werden.

Vorzugsweise wird das Verfahren mit der unten beschriebenen, erfindungsgemäßen Messstation durchgeführt.

Bei einer bevorzugten Variante wird die nominelle Durchbiegung anhand einer Mehrzahl von ersten Stableitern ermittelt. Durch beidseitiges Auflegen mehrerer, beispielsweise von wenigstens drei, wenigstens fünf oder wenigstens zehn, (erster) Stableiter kann eine besonders genaue Kalibrierung erfolgen. Die Anzahl von zweiten Stableiter, die jeweils nur mit ihrer ersten Flachseite für eine Bestimmung der ersten Durchbiegung auf die Auflagen aufgelegt werden, ist bei dieser Variante typischerweise wenigstens 100-mal so groß, insbesondere wenigstens 1000-mal so groß, wie die Anzahl der ersten Stableiter.

Es kann vorgesehen sein, dass zweite Stableiter nur mit ihrer ersten Flachseite auf die Auflagen aufgelegt werden und für die zweiten Stableiter jeweils nur die erste Durchbiegung ermittelt und mit der nominellen Durchbiegung verglichen wird. Der Aufwand zum Bestimmen der Geradheit der zweiten Stableiter wird dadurch minimiert.

Bei einer alternativen Variante ist vorgesehen, dass jeder der Stableiter mit der ersten und der zweiten Flachseite auf die Auflagen aufgelegt wird und jeweils die erste und die zweite Durchbiegung bestimmt werden. Bei dieser Variante werden mithin nur "erste" Stableiter verwendet. Die nominelle Durchbiegung kann individuell anhand der ersten und der zweiten Durchbiegung des jeweiligen Stableiters ermittelt werden. Für jeden einzelnen Stableiter kann derart eine individuelle Kalibrierung erfolgen. Die Geradheit kann somit unabhängig von beispielsweise Geometrieveränderungen wie Dickenvariationen zwischen unterschiedlichen Stableitern, unterschiedlichen Materialeigenschaften oder veränderlichen Eigenschaften einer Beschichtung bestimmt werden.

Bei einer bevorzugten Weiterbildung dieser Variante wird die Abweichung von der nominellen Durchbiegung durch Halbieren der Abweichung zwischen der ersten und der zweiten Durchbiegung ermittelt. Die nominelle Durchbiegung wird somit nur implizit ermittelt. Dies vereinfacht den rechnerischen Aufwand zur Durchführung des Verfahrens.

Die Durchbiegungen können berührungslos bestimmt werden, insbesondere mittels einer Lasermesseinrichtung. Die Durchbiegungen können bei einer berührungslosen Messung nicht durch den Kontakt zwischen einer Messeinrichtung und dem jeweiligen Stableiter verfälscht werden. Dies erhöht die Genauigkeit des Verfahrens. Zudem kann berührungslos besonders schnell gemessen werden. Lasermesseinrichtungen arbeiten besonders präzise.

Bei einer bevorzugten Verfahrensvariante ist vorgesehen, dass die Durchbiegungen anhand eines Abstandes des jeweiligen Stableiters von einem in vertikaler Richtung (relativ zu den Auflagen) feststehenden Referenzstück bestimmt werden. Typischerweise steht das Referenzstück in allen Richtungen fest. Insbesondere bei Verwendung einer höhenverstellbaren Messeinrichtung zum Bestimmen der Durchbiegungen kann durch den Bezug zum Referenzstück die Genauigkeit verbessert werden. Zum Ermitteln der Durchbiegungen kann ein Abstand zwischen dem Referenzstück und dem jeweiligen Stableiter bestimmt werden. Die Durchbiegungen können insbesondere als eine Differenz des (bekannten und unveränderlichen) Abstandes zwischen dem Referenzstück und den Auflagen sowie des Abstandes zwischen dem Referenzstück und dem jeweiligen Stableiter bestimmt werden.

Vorzugsweise liegen die Stableiter beim Bestimmen der Durchbiegungen jeweils an einem Anschlag an. Veränderungen der Durchbiegungen aufgrund unterschiedlich langer Überhänge der Stableiter über die Auflagen hinaus können dadurch vermieden werden.

Typischerweise werden die mehreren Stableiter jeweils einzeln nacheinander auf die Auflagen aufgelegt. Vor dem Auflegen des nachfolgenden Stableiters wird in der Regel der zuvor aufgelegte Stableiter von den Auflagen abgenommen. Es liegt dann jeweils nur ein einziger der Stableiter auf den Auflagen auf. Es ist prinzipiell aber auch denkbar, dass zwei oder mehr Stableiter zugleich auf den Auflagen aufliegen.

### Verfahren zur Geradheitsbestimmung in zwei Ebenen

Die Erfindung betrifft auch ein Verfahren zum Bestimmten der Geradheit von Stableitern in einer ersten und einer zweiten Ebene,
wobei die Stableiter eine erste und eine zweite Flachseite aufweisen, die einander gegenüberliegen und die senkrecht zu der ersten Ebene ausgerichtet sind,
wobei die Stableiter eine weitere erste und eine weitere zweite Flachseite aufweisen, die einander gegenüberliegen und die senkrecht zu der zweiten Ebene ausgerichtet sind,
und wobei die Geradheit in der ersten und der zweiten Ebene jeweils mit einem oben beschriebenen erfindungsgemäßen Verfahren bestimmt wird.

Durch wiederholte Anwendung des oben beschriebenen Verfahrens zur Geradheitsbestimmung in einer Ebene kann in einfacher Weise die Geradheit von Stableitern in zwei Ebenen bestimmt werden. Die Bestimmung der Geradheit der Stableiter in der zweiten Ebenen erfordert nur einen geringen Zusatzaufwand.

Hierzu brauchen die Stableiter lediglich in weiteren Ausrichtungen (mit der weiteren ersten Flachseite und ggf. auch mit der weiteren zweiten Flachseite) auf die Auflagen aufgelegt und weitere Durchbiegungen bestimmt zu werden. Es werden mithin auch für die zweite Ebene eine weitere erste Durchbiegung und wenigstens für einen ersten der Stableiter eine weitere zweite Durchbiegung bestimmt. Eine weitere nominelle Durchbiegung ist als Mittelwert der weiteren ersten Durchbiegung und der weiteren zweiten Durchbiegung definiert. Für jeden Stableiter wird eine weitere Abweichung der weiteren ersten Durchbiegung von der weiteren nominellen Durchbiegung als Maß für die Geradheit in der zweiten Ebene ermittelt.

Die erste und die zweite Ebene sind relativ zu dem Stableiter definiert. Die erste und die zweite Ebene erstrecken sich typischerweise senkrecht zueinander. Die weitere erste und die weitere zweite Flachseite erstrecken sich dann senkrecht zu der ersten und der zweiten Flachseite. In diesem Fall weisen die Stableiter einen Rechteckquerschnitt auf. Ein Abstand der weiteren ersten von der weiteren zweiten Flachseite kann wenigstens 1 mm, insbesondere wenigstens 2 mm, betragen. Der Abstand der weiteren ersten von der weiteren zweiten Flachseite kann höchstens 10 mm, insbesondere höchstens 8 mm, betragen.

Die erste und die zweite Flachseite können einen anderen Abstand voneinander aufweisen als die weitere erste und die weitere zweite Flachseite. Die Stableiter sind in den beiden Ebenen mithin unterschiedlich dick. Durch die Anwendung des oben beschriebenen Verfahrens werden mithin zwei unterschiedliche nominelle Durchbiegungen für eine Kalibrierung in den beiden Ebenen bestimmt. Auf diese Weise kann die Geradheit in den beiden Ebenen bei Stableitern mit unterschiedlichen Dicken in den beiden Ebenen besonders einfach und genau bestimmt werden.

Vorzugsweise wird ein jeder der Stableiter zwischen dem Ermitteln der Durchbiegungen jeweils um 90° um seine Längsachse gedreht. Die Durchführung des Verfahrens wird dadurch vereinfacht und beschleunigt. Die Stableiter brauchen nur einmal (bei zweiten Stableitern, die nur mit der ersten Flachseite und mit der weiteren ersten Flachseite zur Bestimmung der ersten Durchbiegung bzw. der weiteren ersten Durchbiegung auf die Auflagen aufgelegt werden) bzw. dreimal (bei ersten Stableitern, die auch mit der zweiten Flachseite und mit der weiteren zweiten Flachseite zur Bestimmung der zweiten Durchbiegung bzw. der weiteren zweiten Durchbiegung auf die Auflagen aufgelegt werden) um 90° gedreht zu werden.

### Erfindungsgemäße Messstation

In den Rahmen der vorliegenden Erfindung fällt ferner eine Messstation zum Bestimmen der Geradheit von Stableitern mit zwei einander gegenüberliegenden Flachseiten. Die Messstation weist Folgendes auf:
- zwei voneinander beabstandete Auflagen;
- eine zwischen den Auflagen angeordnete Messeinrichtung zum Bestimmen einer Durchbiegung eines (mit einer der Flachseiten) auf die Auflagen aufgelegten Stableiters;
- eine Auswerteeinrichtung, die dazu eingerichtet ist, eine Abweichung der Durchbiegung von einer nominellen Durchbiegung zu ermitteln.

Die Messstation ermöglicht die Durchführung des oben beschriebenen, erfindungsgemäßen Verfahrens.

Die Auflagen sind grundsätzlich auf gleichen vertikalen Höhen, d. h. in einer gemeinsamen horizontalen Ebene, angeordnet. Die Schwerkraft wirkt somit senkrecht zur Ebene der Auflagen.

Die Messeinrichtung ist vorzugsweise zum berührungslosen Bestimmen der Durchbiegung eingerichtet. Insbesondere kann die Messeinrichtung eine Lasermesseinrichtung sein.

Die Auswerteeinrichtung kann in einem Zentralrechner ausgebildet sein und beispielsweise auch für weitere Messstationen verwendet werden. Alternativ kann die Messstation eine individuelle Auswerteeinrichtung aufweisen.

Vorzugsweise ist die Auswerteeinrichtung weiterhin dazu eingerichtet, die nominelle Durchbiegung als einen Mittelwert wenigstens einer ersten und wenigstens einer zweiten Durchbiegung bei Auflage wenigstens eines ersten Stableiters mit der ersten bzw. zweiten Flachseite auf den Auflagen zu ermitteln. Dadurch kann die Genauigkeit der Geradheitsbestimmung erhöht werden.

Die Stableiter können manuell mit den unterschiedlichen Flachseiten auf die Auflagen aufgelegt bzw. gedreht werden. Dies verringert den apparativen Aufwand.

Bevorzugt ist jedoch eine Wendeeinrichtung zum Drehen der Stableiter um ihre Längsachse vorgesehen. Um die Stableiter in unterschiedlichen Ausrichtungen, d. h. mit den unterschiedlichen Flachseiten, auf die Auflagen aufzulegen, können diese, insbesondere automatisiert, mittels der Wendeeinrichtung gedreht werden. Dies kann die Durchführung der Geradheitsbestimmung beschleunigen, die Stableiter beim Drehen schonen und eine präzise Ausrichtung der Stableiter auf den Auflagen sicherstellen.

Die Wendeeinrichtung kann dazu eingerichtet sein, die Stableiter beim Drehen anzuheben. Dadurch wird die mechanische Belastung der Stableiter beim Drehen reduziert. Zudem kann vermieden werden, dass die Stableiter von den Auflagen herabrollen.

Besonders bevorzugt ist die Wendeeinrichtung in Längsrichtung verfahrbar. Durch Verfahren in der Längsrichtung kann die Wendeeinrichtung an den jeweiligen Stableiter gekoppelt werden bzw. von dem Stableiter entfernt werden. Die Wendeeinrichtung kann eine an die Querschnittsform der Stableiter angepasste Aufnahme zum Aufschieben auf die Stableiter aufweisen. Zudem kann die Wendeeinrichtung den Stableiter durch Verfahren in der Längsrichtung an einem Anschlag zur Anlage bringen.

Vorzugsweise ist ein Anschlag für die Stableiter vorgesehen. Indem die Stableiter an dem Anschlag zur Anlage gebracht werden, kann eine definierte Ausrichtung in Längsrichtung relativ zu den Auflagen eingerichtet werden. Veränderungen der Durchbiegungen aufgrund unterschiedlich langer Überhänge der Stableiter über die Auflagen hinaus können dadurch vermieden werden.

Ein Abstand der beiden Auflagen zueinander kann einstellbar sein. Durch kann die Messstation an unterschiedlich lange Stableiter angepasst werden. Typischerweise wird der Abstand der Auflagen so eingestellt, dass er etwas - aber nicht viel - kleiner ist, als die Länge der Stableiter. Dadurch treten größere Durchbiegungen auf, was die Präzision der Geradheitsbestimmung erhöht. Zugleich wird vermieden, dass die Stableiter von den Aufnahmen rutschen. Ein Abstand der Auflagen kann insbesondere auf wenigstens 70 % Länge der jeweiligen Stableiter eingestellt werden. Der Abstand der Auflagen kann insbesondere auf höchstens 90 % Länge der jeweiligen Stableiter eingestellt werden.

Vorzugsweise ist vorgesehen, dass eine der Auflagen feststehend angeordnet ist und die andere Auflage verschieblich ist. Der Aufbau der Messstation wird dadurch vereinfacht. Der Anschlag ist vorzugsweise an der verschieblichen Auflage angeordnet und gemeinsam mit dieser verschieblich. Dies vereinfacht das Auflegen der Stableiter, insbesondere wenn diese von der Seite der feststehenden Auflage her zugeführt werden.

Bevorzugt ist die Messeinrichtung relativ zu der feststehenden Auflage verschieblich. Dies ermöglicht es, die Messeinrichtung mittig zwischen den Auflagen zu platzieren, wo sich die Stableiter am stärksten durchbiegen.

Besonders bevorzugt sind die Verschiebungen der verschieblichen Auflage und der Messeinrichtung gekoppelt, wobei ein Verschiebweg der Messeinrichtung der Hälfte des Verschiebewegs der verschieblichen Auflage entspricht. Dadurch wird die Messeinrichtung beim Verstellen des Abstandes der Auflagen automatisch mittig zwischen den Auflagen ausgerichtet.

Die Kopplung kann mechanisch, beispielsweise über einen Riementrieb, erfolgen. Die verschiebliche Auflage kann fest an einen Riemen, insbesondere einen Zahnriemen, gekoppelt sein. Die Messeinrichtung kann auf einem Schlitten angeordnet sein, welcher eine Rolle, insbesondere eine verzahnte Rolle, trägt, die einerseits an dem Riemen und anderseits an einem feststehenden Gegenstück, insbesondere einer Zahnstange, abrollt.

Eine vorteilhafte Ausführungsform der Messstation ist dadurch gekennzeichnet, dass die Messeinrichtung höhenverstellbar ist. Zum Auflegen der Stableiter auf die Auflagen bzw. für ein Verfahren der Auflagen mit einem aufgelegten Stableiter kann die Messeinrichtung abgesenkt werden, sodass sie bei der Handhabung der Stableiter nicht stört. Zum Bestimmen der Durchbiegungen wird die Messeinrichtung dann jeweils angehoben.

Besonders bevorzugt ist zwischen den Auflagen ein in vertikaler Richtung (relativ zu den Auflagen) feststehendes Referenzstück angeordnet. Typischerweise steht das Referenzstück in allen Richtungen fest. Insbesondere wenn eine höhenverstellbare Messeinrichtung zum Bestimmen der Durchbiegungen vorgesehen ist, kann durch das Referenzstück die Genauigkeit verbessert werden. Zum Ermitteln der Durchbiegungen kann ein Abstand zwischen dem Referenzstück und dem jeweiligen Stableiter bestimmt werden. Die Durchbiegungen können insbesondere als eine Differenz des (bekannten und unveränderlichen) Abstandes zwischen dem Referenzstück und den Auflagen sowie des Abstandes zwischen dem Referenzstück und dem jeweiligen Stableiter bestimmt werden. Das Referenzstück befindet sich typischerweise unterhalb eines auf die Auflagen aufgelegten Stableiters. Dadurch stört das Referenzstück nicht bei der Handhabung des Stableiters.

Die beiden Auflagen können gemeinsam relativ zu der Messeinrichtung verfahrbar sein, insbesondere in horizontaler Richtung. Um die Stableiter auf die Auflagen aufzulegen, können die Auflagen zu einer Aufnahmestelle verfahren werden, an welcher die Stableiter wahlweise der Messstation oder einer weiteren Bearbeitung zugeführt werden können. Insbesondere können nicht zu prüfende Stableiter an der Aufnahmestelle einer Sortiermaschine zugeführt werden, die weiterzuverarbeitende Stableiter und mangelhafte Stableiter trennt. Zur Geradheitsprüfung können die Auflagen mit dem jeweils aufgelegten Stableiter zu der Messeinrichtung verfahren werden.

Es kann vorgesehen sein, dass die Messstation einen Zwischenspeicher für Stableiter aufweist, und dass die Messstation eine Fördereinrichtung aufweist, um Stableiter von den Auflagen in den Zwischenspeicher zu verbringen. Derart kann zumindest zeitweise ein autarker Betrieb der Messstation (ohne Eingriffe von Bedienpersonal) ermöglicht werden. Die Fördereinrichtung vereinfacht es, einen geprüften Stableiter von den Auflagen zu entfernen. Insbesondere kann die Fördereinrichtung dazu eingerichtet sein, die Stableiter automatisch in den Zwischenspeicher zu überführen. Der Zwischenspeicher ermöglicht es, einige (typischerweise wenigstens zehn) Stableiter nach der Geradheitsprüfung bei der Messstation zwischenzulagern. Aus dem Zwischenspeicher können die Stableiter manuell und/oder automatisiert entnommen werden.

Weitere Merkmale und Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: einen Stableiter mit einander paarweise gegenüberliegenden Flachseiten in einer schematischen Perspektivansicht;
- Fig. 2: eine Prinzipskizze des Bestimmens einer Durchbiegung eines auf zwei Auflagen aufgelegten Stableiters unter Verwendung eines Referenzstücks, für die Erfindung;
- Fig. 3a: ein schematisches Ablaufdiagramm einer ersten Variante eines erfindungsgemäßen Verfahrens zur Geradheitsbestimmung;
- Fig. 3b: ein schematisches Ablaufdiagramm einer zweiten Variante eines erfindungsgemäßen Verfahrens zur Geradheitsbestimmung;
- Fig. 4: eine erste Ausführungsform einer erfindungsgemäßen Messstation aufweisend zwei verfahrbare Auflagen und eine höhenverstellbare Messeinrichtung, in einer schematischen Perspektivansicht;
- Fig. 5: die Messstation von Figur 4 mit an eine Aufnahmestelle verschobenen Auflagen beim Auflegen eines Stableiters, in einer schematischen Perspektivansicht;
- Fig. 6: eine höhenverstellbare Wendeeinrichtung für die Messstation von Figur 4, in einer schematischen Perspektivansicht;
- Fig. 7: eine Fördereinrichtung und eine Speichereinrichtung der Messstation von Figur 4; in einer schematischen Seitenansicht;
- Fig. 8: eine zweite Ausführungsform einer erfindungsgemäßen Messstation mit einer in Längsrichtung beweglichen Wendeeinrichtung, in einer schematischen Perspektivansicht;
- Fig. 9: die Wendeeinrichtung der Messstation von Figur 8 in einer schematischen Perspektivansicht;
- Fig. 10: die Wendeeinrichtung der Messstation von Figur 8 in einer schematischen Schnittansicht;
- Fig. 11: eine dritte Ausführungsform einer erfindungsgemäßen Messstation, mit einer feststehenden und einer verschieblichen Auflage sowie mit einer automatisch zwischen den Auflagen zentrierten Messeinrichtung, in einer schematischen Perspektivansicht;
- Fig. 12: einen Ausschnitt der Messstation von Figur 11 im Bereich der verschieblichen Auflage, in einer vergrößerten schematischen Perspektivansicht;
- Fig. 13: die Messeinrichtung der Messstation von Figur 11 in einer schematischen Schnittansicht durch die Messeinrichtung.

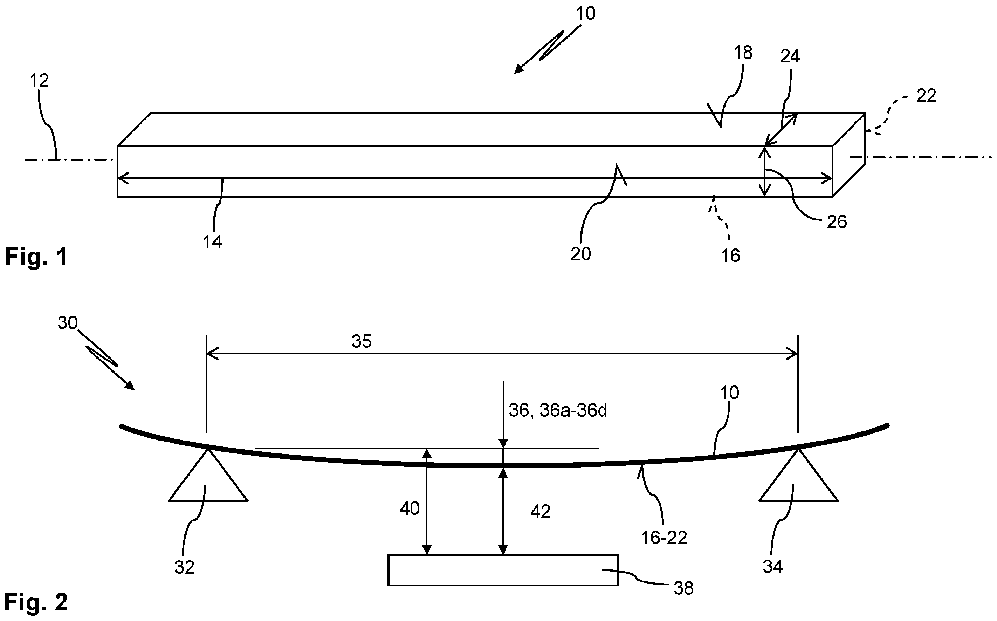

**Figur 1** zeigt eine Prinzipskizze eines Stableiters **10.** Der Stableiter 10 erstreckt sich geradlinig entlang einer Längsachse **12.** Eine entlang der Längsachse 12 gemessene Länge **14** des Stableiters kann beispielsweise zwischen 200 mm und 800 mm betragen. Der Stableiter 10 besteht aus einer Kupferlegierung. Mit Ausnahme seiner axialen Enden kann der Stableiter 10 eine nicht näher dargestellte isolierende Beschichtung aufweisen.

Der Stableiter 10 weist einen Rechteckquerschnitt auf. Eine erste Flachseite **16** liegt einer zweiten Flachseite **18** gegenüber. Die erste und die zweite Flachseite 16, 18 erstrecken sich senkrecht zu einer ersten Ebene, welche die Längsachse 12 enthält. Eine weitere erste Flachseite **20** liegt einer weiteren zweiten Flachseite **22** gegenüber. Die weitere erste und die weitere zweite Flachseite 20, 22 erstrecken sich senkrecht zu einer zweiten Ebene, welche die Längsachse 12 enthält. Die erste und die zweite Ebene verlaufen bei einem im Querschnitt rechteckigen Stableiter 10 senkrecht zueinander. Ein Abstand **24** der weiteren ersten Flachseite 20 von der weiteren zweiten Flachseite 22 kann größer sein als ein Abstand **26** der ersten Flachseite 16 von der zweiten Flachseite 18, beispielsweise um wenigstens 10 %.

**Figur 2** zeigt eine Prinzipskizze eines Ausschnitts einer Messstation **30** zum Bestimmen der Geradheit von Stableitern 10. Für die Geradheitsbestimmung wird jeder Stableiter 10 mit zumindest einer seiner Flachseiten 16-22 auf zwei Auflagen **32, 34** aufgelegt. Der Stableiter 10 wird dabei so angeordnet, dass entweder beide Auflagen 32, 34 sich im Bereich der abisolierten Enden des Stableiters 10 befinden oder dass sich beide Auflagen 32, 34 im Bereich mit der Isolierschicht befinden. Ein Abstand **35** der Auflagen 32, 34 ist entsprechend gewählt bzw. eingestellt. Die beiden Auflagen 32, 34 befinden sich grundsätzlich auf derselben vertikalen Höhe.

Aufgrund seines Eigengewichts biegt sich der Stableiter 10 zwischen den Auflagen 32, 34 durch, was in Figur 2 übertrieben dargestellt ist. Eine Durchbiegung **36** beschreibt, wie weit sich die auf den Auflagen 32, 34 jeweils aufliegende Flachseite 16-22 unterhalb der Ebene der Auflagen 32, 34 befindet. Diese Durchbiegung 36 ist von der Geradheit und der Orientierung des Stableiters 10, d. h. der auf den Auflagen 32, 34 jeweils aufliegenden Flachseite 16-22, abhängig. Nachfolgend werden den einzelnen Flachseiten 16-22 jeweilige Durchbiegungen 36a-36d zugeordnet.

Zur präzisen Bestimmung der Durchbiegungen 36 kann ein Referenzstück **38** verwendet werden. Das Referenzstück 38 weist einen bekannten und feststehenden vertikalen Abstand **40** von einer Auflagefläche der Auflagen 32, 34 auf. Ein Abstand **42** des Stableiters 10, d. h. der Abstand der auf den Auflagen 32, 34 aufliegenden Flachseite 16-22 des Stableiters 10, von dem Referenzstück 38 kann mit einer Figur 2 nicht näher dargestellten Messeinrichtung bestimmt werden. Die Durchbiegung 36 ergibt sich dann aus der Differenz der Abstände 40 und 42.

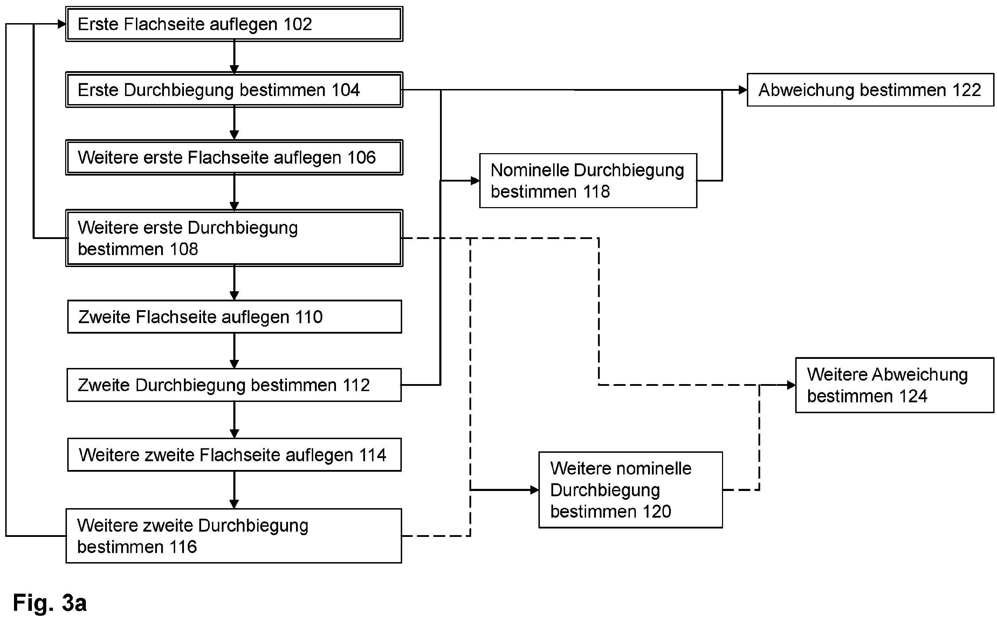

Das Vorgehen zur Geradheitsbestimmung sei anhand des in **Figur 3a** gezeigten Ablaufdiagramms beschrieben, wobei ergänzend auf die Figuren 1 und 2 und die obige Beschreibung Bezug genommen wird.

Ein jeder auf Geradheit zu prüfende Stableiter 10 wird zumindest mit seiner ersten Flachseite 16 auf die Auflagen 32, 34 aufgelegt, vergleiche Schritt **102.** Sodann wird eine erste Durchbiegung **36a** bestimmt, vergleiche Schritt **104.**

Es kann vorgesehen sein, dass die Geradheit des Stableiters 10 auch in der zweiten Ebene bestimmt werden soll. Dann wird in einem Schritt **106** die weitere erste Flachseite 20 auf die Auflagen 32, 34 aufgelegt; hierzu kann der Stableiter 10 um 90° um seine Längsachse 12 gedreht werden. Wenn die weitere erste Flachseite 20 auf den Auflagen 32, 34 aufliegt, wird eine weitere erste Durchbiegung **36c** bestimmt, vergleiche Schritt **108.**

Zumindest einer von mehreren gleichartigen, auf Geradheit zu prüfenden Stableitern 10 wird auch mit der zweiten Flachseite 18 auf die Auflagen 32, 34 aufgelegt, vergleiche Schritt **110.** Hierzu kann der Stableiter 10 um weitere 90° um seine Längsachse 12 gedreht werden. Falls keine Geradheitsbestimmung in zwei Ebenen erfolgen soll, kann der Stableiter 10 ausgehend von der Auflage der ersten Flachseite 16 um 180° gedreht werden. Wenn die zweite Flachseite 18 auf den Auflagen 32, 34 aufliegt, wird eine zweite Durchbiegung **36b** bestimmt, vergleiche Schritt **112.**

Für eine Geradheitsbestimmung in zwei Ebenen wird bei zumindest einem von mehreren gleichartigen Stableitern 10 auch die weitere zweite Flachseite 22 auf die Auflagen 32, 34 aufgelegt, vergleiche Schritt **114;** hierzu kann der Stableiter 10 um weitere 90° gedreht werden. Wenn die weitere zweite Flachseite 22 auf den Auflagen 32, 34 aufliegt, wird eine weitere zweite Durchbiegung **36d** bestimmt, vergleiche Schritt **116.**

Ein Mittelwert der ersten und zweiten Durchbiegungen 36a, 36b entspricht einer nominellen Durchbiegung eines (gedachten) perfekt geraden Stableiters in der ersten Ebene, d. h. bei Auflage mit der ersten oder zweiten Flachseite. Die nominelle Durchbiegung kann anhand einer oder mehrerer gemessener erster und zweiter Durchbiegungen 36a, 36b explizit berechnet werden, vergleiche Schritt **118.**

In gleicher Weise entspricht ein Mittelwert der weiteren ersten und weiteren zweiten Durchbiegungen 36c, 36d einer weiteren nominellen Durchbiegung eines (gedachten) perfekt geraden Stableiters in der zweiten Ebene, d. h. bei Auflage mit der weiteren ersten oder weiteren zweiten Flachseite. Die weitere nominelle Durchbiegung kann anhand einer oder mehrerer gemessener weiterer erster und weiterer zweiter Durchbiegungen 36a, 36b explizit berechnet werden, vergleiche Schritt **120.**

Als ein Maß für die Geradheit in der ersten Ebene wird für einen jeden Stableiter 10 eine Abweichung seiner ersten Durchbiegung 36a von der nominellen Durchbiegung bestimmt, vergleiche Schritt **122.**

Wenn die nominelle Durchbiegung nach Vermessung eines oder mehrerer Stableiter 10 explizit bestimmt wurde, brauchen weitere auf Geradheit zu prüfende Stableiter 10 jeweils nur mit der ersten Flachseite 16 auf die Auflagen 32, 34 aufgelegt und die jeweilige erste Durchbiegung 36a bestimmt zu werden (erneute Durchführung der Schritte 102 und 104; dies ist in Figur 3a durch doppelte Umrandung angedeutet). Für die weiteren Stableiter 10 entfallen dann die Schritte 110 und 112. Die Abweichung, welche die Geradheit in der ersten Ebene beschreibt, kann als Differenz der jeweils bestimmten ersten Durchbiegung 36a und der zuvor ermittelten nominellen Durchbiegung berechnet werden.

In entsprechender Weise wird als ein Maß für die Geradheit in der zweiten Ebene für einen jeden Stableiter 10 eine weitere Abweichung seiner weiteren ersten Durchbiegung 36c von der weiteren nominellen Durchbiegung bestimmt, vergleiche Schritt **124.**

Wenn die weitere nominelle Durchbiegung nach Vermessung eines oder mehrerer Stableiter 10 explizit bestimmt wurde, brauchen weitere auf Geradheit zu prüfende Stableiter 10 jeweils nur mit der weiteren ersten Flachseite 20 auf die Auflagen 32, 24 aufgelegt und die jeweilige weitere erste Durchbiegung 36c bestimmt zu werden (erneute Durchführung der Schritte 106 und 108; dies ist in Figur 3a durch doppelte Umrandung angedeutet). Für die weiteren Stableiter 10 entfallen dann die Schritte 114 und 116. Die weitere Abweichung, welche die Geradheit in der zweiten Ebene beschreibt, kann als Differenz der jeweils bestimmten weiteren ersten Durchbiegung 36c und der zuvor ermittelten weiteren nominellen Durchbiegung berechnet werden.

Wenn die Geradheit nur in der ersten Ebene bestimmt werden soll, entfallen die Schritte 106, 108, 114, 116, 120 und 124.

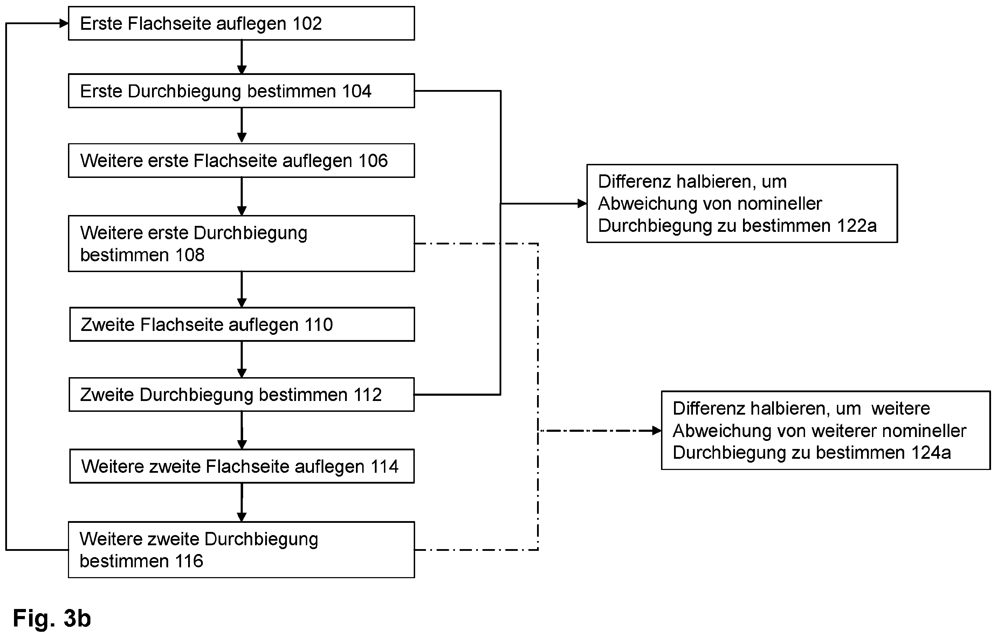

Alternativ können für jeden auf Geradheit zu prüfenden Stableiter 10 auch die zweite Durchbiegung 36b und ggf. die weitere zweite Durchbiegung 36d bestimmt werden, vergleiche **Figur 3b****.** Die nominelle Durchbiegung bzw. die weitere nominelle Durchbiegung brauchen dann nicht explizit berechnet zu werden. Es kann vielmehr für jeden Stableiter 10 individuell, als ein Maß für die die Geradheit in der ersten Ebene, die Abweichung der ersten Durchbiegung 36a von der nominellen Durchbiegung durch Halbieren der Differenz zwischen der ersten Durchbiegung 36a und der zweiten Durchbiegung 36b berechnet werden, vergleiche Schritt **122a.** Entsprechend kann für jeden Stableiter 10 individuell, als Maß für die die Geradheit in der zweiten Ebene, die Abweichung der weiteren ersten Durchbiegung 36c von der weiteren nominellen Durchbiegung durch Halbieren der Differenz zwischen der weiteren ersten Durchbiegung 36c und der weiteren zweiten Durchbiegung 36d berechnet werden, vergleiche Schritt **124a.**

Wenn die Geradheit nur in der ersten Ebene bestimmt werden soll, entfallen die Schritte 106, 108, 114, 116 und 124a.

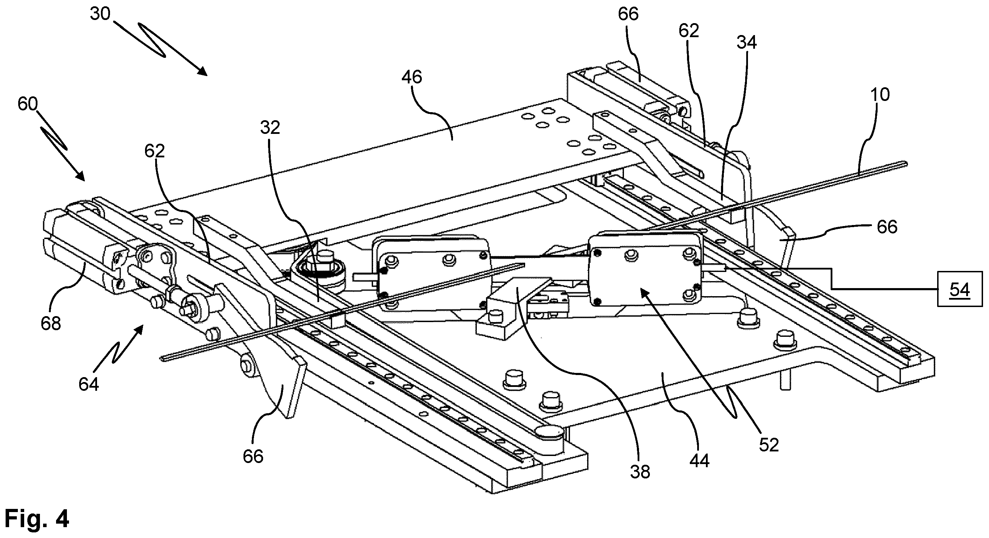

**Figur 4** zeigt eine Messstation 30, mit welcher das vorbeschriebene Verfahren zum Bestimmen der Geradheit von Stableitern 10 durchgeführt werden kann. Die Messstation 30 weist einen Grundkörper **44** auf. An dem Grundkörper 42 ist ein Referenzstück 38 unverschieblich gehalten.

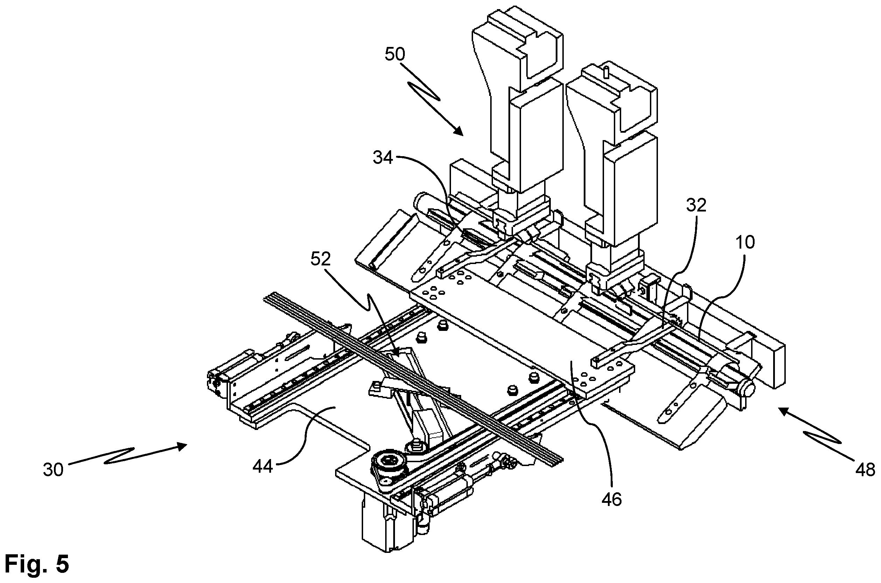

Zwei Auflagen 32, 34 der Messeinrichtung 30 sind hier an Kragarmen ausgebildet. Die beiden Auflagen 32, 34 sind voneinander beabstandet an einem Schiebeelement **46** angeordnet. Mittels des Schiebeelements 46 können die beiden Auflagen 32, 34 gemeinsam in horizontaler Richtung relativ zu dem Grundkörper 44 mit dem Referenzstück 38 verschoben werden, vergleiche auch **Figur 5****.**

In Figur 5 sind die Auflagen 32, 24 zu einer Sortiermaschine **48** an eine Aufnahmestelle vorgeschoben. Ein Greifer **50,** mit hier zwei Greifzangen, dient dazu, wahlweise einen Stableiter 10 auf die Auflagen 32, 34 der Messstation 30 aufzulegen oder den Stableiter 10 zum Sortieren an die Sortiermaschine 48 zu übergeben. In Figur 4 befinden sich die Aufnahmen 32, 34 mit dem aufgelegten Stableiter 10 an einer Messstelle. Der Stableiter 10 erstreckt sich oberhalb des Referenzstücks 38 durch einen (schematisch angedeuteten) Messbereich einer Messeinrichtung **52.**

Die Messeinrichtung 52 ist hier als eine Lasermesseinrichtung ausgebildet. Die Messeinrichtung ist relativ zu dem Grundkörper 44 in vertikaler Richtung höhenverstellbar, vergleiche Figuren 4 und 5. In Figur 4 befindet sich die Messeinrichtung 52 in einer angehobenen Stellung, in welcher sie die Durchbiegung des auf die Auflagen 32, 40 aufgelegten Stableiters 10 unter Bezugnahme zu dem Referenzstück 38 berührungslos messen kann, vergleiche auch Figur 2 und die vorstehende Beschreibung. In Figur 5 ist die Messeinrichtung 52 abgesenkt, sodass das Schiebeelement 46 mit den Auflagen 32, 34 und ein aufgelegter Stableiter 10 über die Messeinrichtung 52 hinweg verfahren werden können. Das feststehende Referenzstück 38 befindet sich unterhalb der Verfahrebenen des Schiebeelements 46 bzw. des aufgelegten Stableiters 10.

Die Messeinrichtung 52 ist mit einer Auswerteeinrichtung **54** verbunden, vergleiche Figur 4. Die Auswerteeinheit 54 ist dazu eingerichtet, in der oben beschriebenen Weise die Geradheit des Stableiters 10 zu bestimmen. Hierzu wertet die Auswerteeinrichtung 54 Messergebnisse der Messeinrichtung 52 aus. Zudem kann die Auswerteeinrichtung 54 die Messeinrichtung 52 und das Schiebeelement 46 mit den Aufnahmen 32, 34 steuern. Die Auswerteeinrichtung 54 kann mit einer Steuereinrichtung für eine übergeordnete Produktionsanlage zur Herstellung von Stableitern verbunden und insbesondere in diese integriert sein.

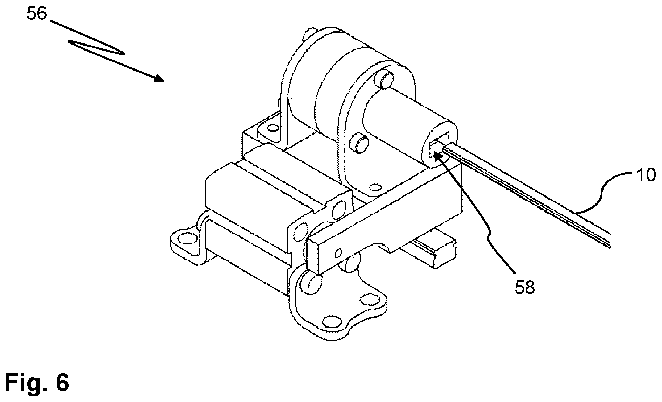

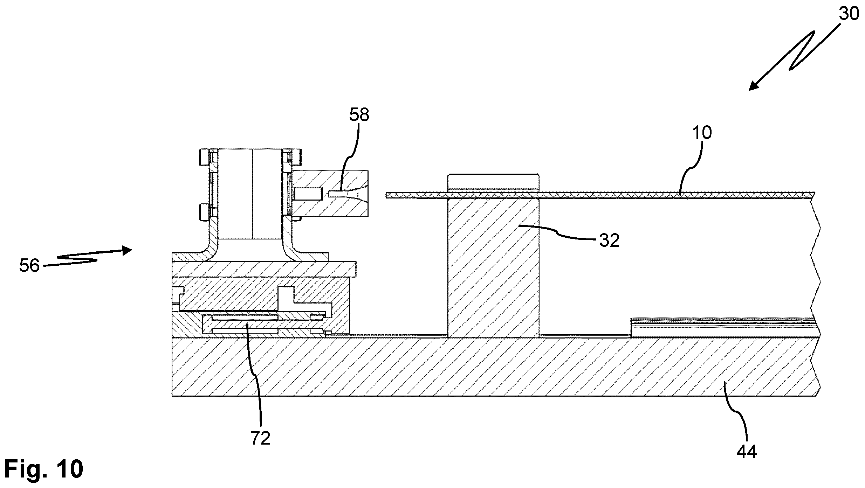

Um einen an der Messstelle angeordneten Stableiter 10 um seine Längsachse zu drehen, kann eine in **Figur 6** dargestellte Wendeeinrichtung **56** vorgesehen sein. Die Wendeeinrichtung 56 weist eine drehbare Aufnahme **58** auf, welche einenends auf den Stableiter 10 aufgeschoben werden kann und diesen vorzugsweise formschlüssig greift. Die Wendeeinrichtung 56 kann hierzu in Längsrichtung des Stableiters 10 verschoben werden. Dabei kann der Stableiter 10 anderenends an einem nicht näher dargestellten Anschlag anliegen. Bei der dargestellten Ausführungsform ist die Wendeeinrichtung 56 höhenverstellbar, um den Stableiter 10 beim Drehen anzuheben. Dadurch wird vermieden, dass der Stableiter 10 beim Drehen von den Auflagen 32, 34 rollt. Vorliegend weist die Wendeeinrichtung 56 eine konisch ausgeformte Aufnahme 58 auf, die den Stableiter 10 bei der linearen Zustellung über die jeweils untere Schräge der Aufnahme 58 anhebt (vgl. auch **Figur 10****).** Alternativ kann der Stableiter 10 aber auch über eine aktive Hubeinheit (nicht dargestellt) angehoben werden. Die Wendeeinrichtung 56 kann von der Auswerteeinrichtung 54 angesteuert werden, um unterschiedliche Flachseiten 16-22 des Stableiters 10 auf den Auflagen 32, 34 zur Anlage zu bringen.

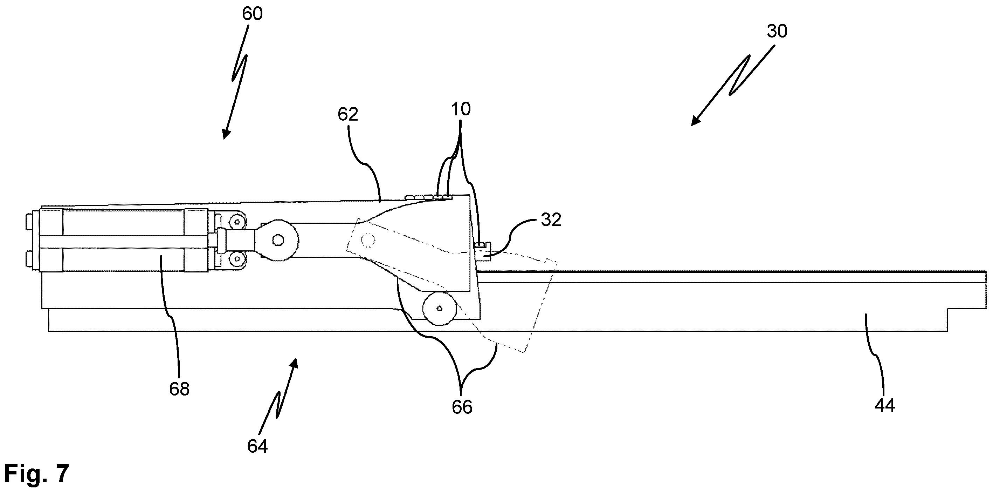

Die Messstation 30 weist hier ferner einen Zwischenspeicher **60** für auf Geradheit geprüfte Stableiter 10 auf, siehe auch **Figur 7****.** Der Zwischenspeicher 60 ist mit zwei Auflagenleisten **62** gebildet, welche sich seitlich des Schiebeelements 46 erstrecken, vergleiche Figur 4. Eine Fördereinrichtung **64** kann jeweils einen Stableiter 10 von den Auflagen 32, 34 in den Zwischenspeicher 60 heben. Die Fördereinrichtung 64 weist zwei Hakenarme **66** auf. Die Hakenarme 66 sind an den Auflageleisten 62 beweglich geführt. Beim Prüfen eines jeweiligen Stableiters 10 befinden sich die Hakenarme 66 in einer in Figur 7 strichpunktiert dargestellten, vorgeschobenen Position. Um den jeweiligen Stableiter 10 von den Auflagen 32, 34 in den Zwischenspeicher 60 zu verbringen, werden die Hakenarme 66 in eine in Figur 7 mit durchgezogenen Linien dargestellte zurückgezogene Position zurückgezogen. Beim Zurückziehen der Hakenarme 66 wird der Stableiter 10 zunächst angehoben. Sodann wird der Stableiter im Wesentlichen in horizontaler Richtung auf die Auflageleisten 62 gezogen. Zum Bewegen der Hakenarme 66 sind hier Linearzylinder **68** vorgesehen.

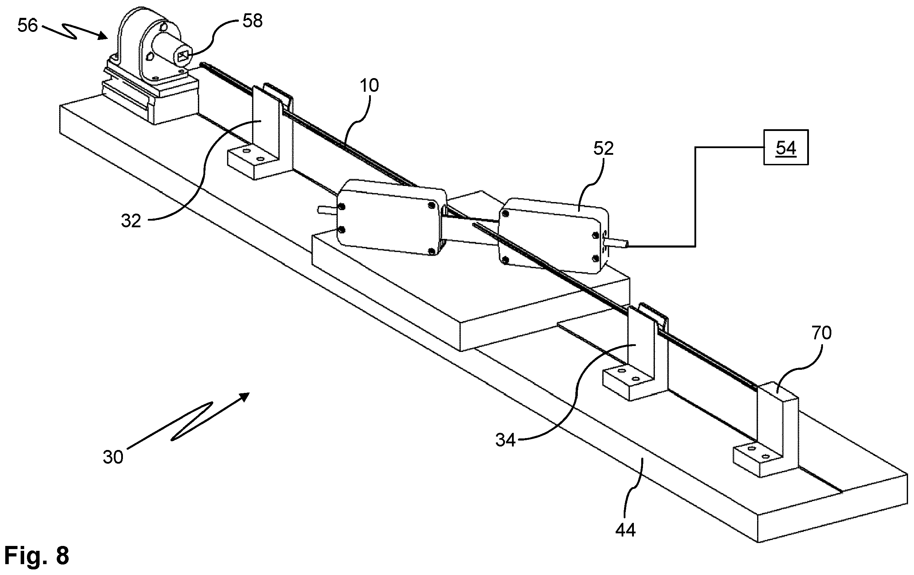

**Figur 8** zeigt eine weitere Messstation 30 zur Durchführung des oben beschriebenen Verfahrens zu Geradheitsbestimmung von Stableitern 10. Bei der Messstation 30 von Figur 8 sind zwei Auflagen 32, 34 und eine Messeinrichtung 52 feststehend an einem Grundkörper 44 befestigt. Zudem ist ein Anschlag **70** feststehend an dem Grundkörper 44 befestigt.

Die Messeinrichtung 52 ist auch hier mit einer Auswerteeinrichtung 54 verbunden, die dazu eingerichtet ist, in der oben beschriebenen Weise die Geradheit des Stableiters 10 zu bestimmen sowie die Messeinrichtung 52 und eine Wendeeinrichtung 56 anzusteuern. Die Messeinrichtung 52 arbeitet auch hier berührungslos und ist als optische Messeinrichtung, insbesondere als Lasermesseinrichtung, ausgebildet.

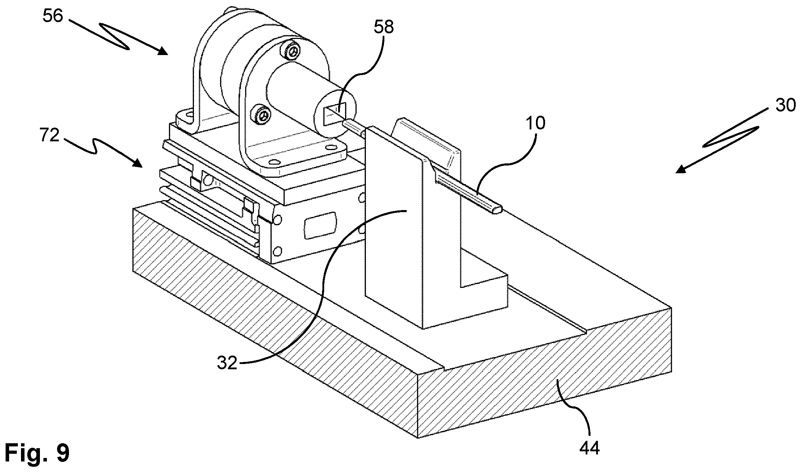

Die Wendeeinrichtung 56 ist über eine Linearführung **72** in Längsrichtung des Stableiters 10 verschieblich, vergleiche auch **Figuren 9** und **10****.** Eine drehbare Aufnahme 58 der Wendeeinrichtung 56 weist eine Innenkontur auf, die an einen Querschnitt des Stableiters 10 angepasst ist. Die Innenkontur der Aufnahme 58 kann sich zum offenen Ende hin erweitern, siehe insbesondere Figur 10.

Beim Messen der Durchbiegungen liegt der Stableiter 10 mit einem Ende an dem Anschlag 70 an. Wenn die Wendeeinrichtung 56 auf das andere Ende des Stableiters 10 aufgeschoben wird, verschiebt sich der Stableiter 10 somit nicht. Verfälschungen der Durchbiegungen aufgrund einer Verschiebung des Stableiters 10 in Längsrichtung werden dadurch vermieden.

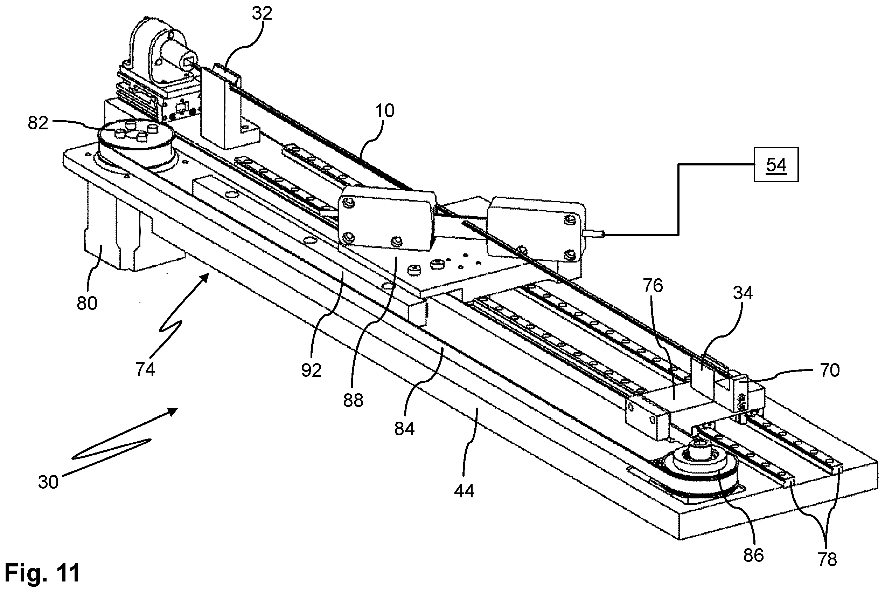

**Figur 11** zeigt eine weitere Messstation 30 zur Durchführung des oben beschriebenen Verfahrens zu Geradheitsbestimmung von Stableitern 10.

Bei der Messstation 30 von Figur 11 ist eine erste Auflage 32 feststehend an einem Grundkörper 44 angeordnet. Bei der feststehenden Auflage 32 ist eine in Längsrichtung des Stableiters 10 verschiebliche Wendeeinrichtung 56 vorgesehen. Zu Aufbau und Funktion der Wendeeinrichtung 56 sei auf die Figuren 8 bis 10 und die vorstehende Beschreibung verwiesen.

Eine zweite Auflage 34 ist verschieblich an dem Grundkörper 44 geführt. An der verschieblichen Auflage 34 ist ein Anschlag 70 befestigt. Der Anschlag 70 und die verschiebliche Auflage 34 sind somit gemeinsam relativ zu der feststehenden Auflage 32 bewegbar. Durch Verändern des Abstands der Auflagen 32, 34 kann die Messstation 30 an unterschiedlich lange Stableiter 10 angepasst werden.

Zum Verschieben der Auflage 34 dient ein Riementrieb **74.** Mittels eines Motors **80** ist eine erste Riemenscheibe **82** antreibbar, um einen Riemen **84** zu bewegen. Der Riemen 84 ist hier ein Zahnriemen. Eine zweite Riemenscheibe **86** dient der Umlenkung des Riemens 84.

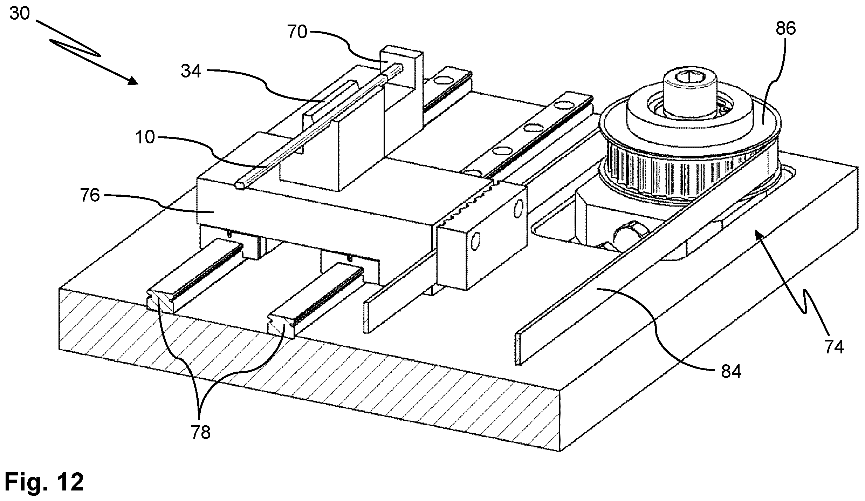

Die verschiebliche Auflage 34 und der Anschlag 70 sind an einem Auflageschlitten **76** angeordnet. Der Auflageschlitten 76 ist auf Schienen **78** am Grundkörper 44 geführt. Der Auflageschlitten 76 ist an dem Riemen 84 fixiert, siehe auch **Figur 12****.** Derart können die Auflage 34 und der Anschlag 70 mittels des Riementriebs 74 relativ zur feststehenden Auflage 32 bewegt werden.

Auch die Messeinrichtung 52 ist relativ zu der feststehenden Auflage 32 verschieblich. Bewegungen der Messeinrichtung 52 und der verschieblichen Auflage 34 sind derart gekoppelt, dass ein Verschiebeweg der Messeinrichtung 52 halb so groß ist wie der Verschiebeweg der Auflage 34. Dadurch kann erreicht werden, dass sich die Messeinrichtung 52 stets mittig zwischen den Auflagen 32, 34 befindet.

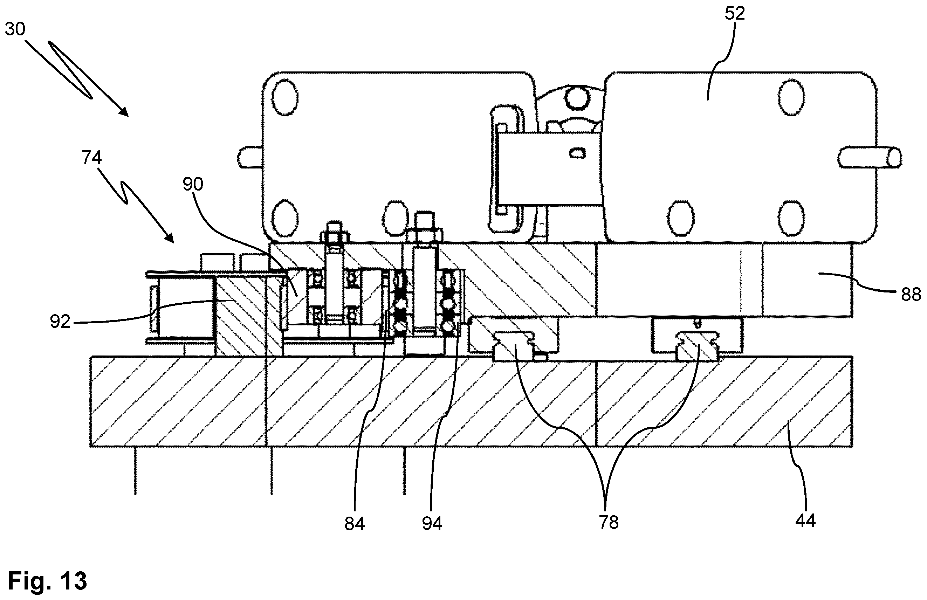

Die Messeinrichtung 52 ist auf einem Messschlitten **88** angeordnet. Der Messschlitten 88 ist ebenfalls auf den Schienen 78 am Grundkörper 44 geführt. Ferner wird auch der Messschlitten 88 mittels des Riementriebs 74 bewegt, vergleiche auch **Figur 13****.** Um die unterschiedlichen Verschiebewege des Messschlittens 88 und des Auflageschlittens 76 einzurichten, ist der Messschlitten 88 nicht starr an den Riemen 84 gekoppelt. An dem Messschlitten 88 ist eine Zahnrolle **90** gelagert. Die Zahnrolle 90 rollt einerseits an einer Zahnstange **92** ab, die feststehend an dem Grundkörper 44 angeordnet ist. Andererseits rollt die Zahnrolle 90 an dem Riemen 84 ab. Eine Druckrolle **94** kann den Riemen 84 gegen die Zahnrolle 90 drücken.

Die zwischen der feststehenden Zahnstange 92 und dem bewegten Riemen 84 rollende Zahnrolle 90 bewirkt somit eine Halbierung des Weges des Riemens 84 für den Messschlitten 88. Derart kann auf mechanischem Wege eine präzise Kopplung zwischen dem Messschlitten 88 und der verschieblichen Auflage 34 eingerichtet werden. Auf diese Weise wird erreicht, dass die Messeinrichtung 52 unabhängig von der Länge des Stableiters 10 - und entsprechend unabhängig von dem Abstand der Auflagen 32, 34 - stets die maximale Durchbiegung des Stableiters 10 in der Mitte zwischen den Auflagen 32, 34 erfasst.

Auch hier ist die Messeinrichtung 52 mit einer Auswerteeinrichtung 54 (vergleiche Figur 11) verbunden, die dazu eingerichtet ist, in der oben beschriebenen Weise die Geradheit des Stableiters 10 zu bestimmen sowie die Messeinrichtung 52, die Wendeeinrichtung 56 und den Riementrieb 74 anzusteuern. Die Messeinrichtung 52 arbeitet auch hier berührungslos und ist als optische Messeinrichtung, insbesondere als Lasermesseinrichtung, ausgebildet.

Zusammenfassend betrifft die Erfindung Verfahren und Vorrichtungen zur einfachen und präzisen Bestimmung der Geradheit von Stableitern. Zu prüfende Stableiter werden auf zwei Auflagen aufgelegt und es wird eine schwerkraftbedingte Durchbiegung des jeweiligen Stableiters zwischen den Auflagen bestimmt. Eine nominelle Durchbiegung eines perfekt geraden Stableiters entspricht einem Mittelwert von Durchbiegungen, die sich einstellen, wenn Stableiter in zwei um 180° um ihre Längsachse gedrehten Ausrichtungen auf die Auflagen aufgelegt werden. Durch Vergleich der Durchbiegung bei einer der Ausrichtungen des Stableiters mit der nominellen Durchbiegung wird auf die Geradheit des Stableiters geschlossen. Die nominelle Durchbiegung kann für jeden Stableiter individuell aus den beiden Durchbiegungen bei um 180° gedrehter Auflage dieses Stableiters ermittelt werden; in diesem Fall gibt die Differenz der Abweichungen ein Maß für die Abweichung von der nominellen Durchbiegung an, ohne dass die nominelle Durchbiegung explizit berechnet zu werden braucht. Alternativ kann für gleichartige Stableiter die nominelle Durchbiegung explizit durch beidseitige Messung eines oder mehrerer Stableiter bestimmt werden; für weitere gleichartige Stableiter braucht dann nur eine einzige Durchbiegung ermittelt zu werden, die mit der nominellen Durchbiegung verglichen wird. Für Stableiter mit Rechteckquerschnitt kann auf diese Weise die Geradheit in beiden zu den Flachseiten senkrechten Ebenen bestimmt werden.

### Bezugszeichenliste

Stableiter **10**
Längsachse **12**
Länge **14**
erste Flachseite **16**
zweiten Flachseite **18**
weitere erste Flachseite **20**
weitere zweite Flachseite **22**
Abstand **24** der weiteren ersten und weiteren zweiten Flachseiten 20, 22
Abstand **26** der ersten und zweiten Flachseiten 16, 18
Messstation **30**
Auflagen **32, 34**
Abstand **35** der Auflagen 32, 34
Durchbiegung **36**
erste Durchbiegung **36a**
zweite Durchbiegung **36b**
weitere erste Durchbiegung **36c**
weitere zweite Durchbiegung **36d**
Referenzstück **38**
Abstand **40** zwischen den Auflagen 32, 34 und dem Referenzstück 38
Abstand **42** zwischen dem Stableiter 10 und dem Referenzstück 38
Grundkörper **44**
Schiebeelement **46**
Sortiermaschine **48**
Greifer **50**
Messeinrichtung **52**
Auswerteeinrichtung **54**
Wendeeinrichtung **56**
Aufnahme **58**
Zwischenspeicher **60**
Auflagenleisten **62**
Fördereinrichtung **64**
Hakenarme **66**
Linearzylinder **68**
Anschlag **70**
Linearführung **72**
Riementrieb **74**
Auflageschlitten **76**
Schienen **78**
Motors **80**
angetriebene Riemenscheibe **82**
Riemen **84**
zweite Riemenscheibe **86**
Messschlitten **88**
Zahnrolle **90**
Zahnstange **92**
Druckrolle **94**
erste Flachseite auflegen **102**
erste Durchbiegung bestimmen **104**
weitere erste Flachseite auflegen **106**
weitere erste Durchbiegung bestimmen **108**
zweite Flachseite auflegen **110**
zweite Durchbiegung bestimmen **112**
weitere zweite Flachseite auflegen **114**
weitere zweite Durchbiegung bestimmen **116**
nominelle Durchbiegung bestimmen **118**
weitere nominelle Durchbiegung bestimmen **120**
Abweichung zwischen erster Durchbiegung und nomineller Durchbiegung bestimmen **122**
Abweichung zwischen weiterer erster Durchbiegung und weiterer nomineller Durchbiegung bestimmen **124**
Differenz zwischen erster und zweiter Durchbiegung halbieren, um Abweichung von nomineller Durchbiegung zu bestimmen **122a**
Differenz zwischen weiterer erster und weiterer zweiter Durchbiegung halbieren, um weitere Abweichung von weiteren nomineller Durchbiegung zu bestimmen **124a**

## Patentansprüche

1. Verfahren zum Bestimmen der Geradheit von Stableitern (10) mit einer ersten und einer zweiten Flachseite (16, 18), die einander gegenüberliegen, wobei die Stableiter (10) jeweils mit der ersten Flachseite (16) auf zwei voneinander beabstandete Auflagen (32, 34) aufgelegt werden und eine erste Durchbiegung (36a) des jeweiligen Stableiters (10) zwischen den Auflagen (32, 34) bestimmt wird,
wobei wenigstens ein erster der Stableiter (10) auch mit der zweiten Flachseite (18) auf die Auflagen (32, 34) aufgelegt wird und eine zweite Durchbiegung (36b) des ersten Stableiters (10) zwischen den Auflagen (32, 34) bestimmt wird,
wobei eine nominelle Durchbiegung durch einen Mittelwert der ersten und zweiten Durchbiegungen (36a, 36b) definiert ist,
und wobei für einen jeweiligen Stableiter (10) eine Abweichung der ersten Durchbiegung (36a) von der nominellen Durchbiegung als ein Maß für die Geradheit ermittelt wird.

2. Verfahren nach Anspruch 1, **dadurch gekennzeichnet, dass** die nominelle Durchbiegung anhand einer Mehrzahl von ersten Stableitern (10) ermittelt wird.

3. Verfahren nach Anspruch 1 oder 2, **dadurch gekennzeichnet, dass** zweite Stableiter (10) nur mit ihrer ersten Flachseite (16) auf die Auflagen (32, 34) aufgelegt werden und für die zweiten Stableiter (10) jeweils nur die erste Durchbiegung (36a) ermittelt und mit der nominellen Durchbiegung verglichen wird.

4. Verfahren nach Anspruch 1, **dadurch gekennzeichnet, dass** jeder der Stableiter (10) mit der ersten und der zweiten Flachseite (16, 18) auf die Auflagen (32, 34) aufgelegt wird und jeweils die erste und die zweite Durchbiegung (36a, 36b) bestimmt werden, insbesondere wobei die Abweichung von der nominellen Durchbiegung durch Halbieren der Abweichung zwischen der ersten und der zweiten Durchbiegung (36a, 36b) ermittelt wird.

5. Verfahren nach einem der vorhergehenden Ansprüche, **dadurch gekennzeichnet, dass** die Durchbiegungen (36a, 36b) berührungslos bestimmt werden, insbesondere mittels einer Lasermesseinrichtung.

6. Verfahren nach einem der vorhergehenden Ansprüche, **dadurch gekennzeichnet, dass** die Durchbiegungen (36a, 36b) anhand eines Abstandes (42) des jeweiligen Stableiters (10) von einem in vertikaler Richtung feststehenden Referenzstück (38) bestimmt werden.

7. Verfahren zum Bestimmen
der Geradheit von Stableitern (10) in einer ersten und einer zweiten Ebene,
wobei die Stableiter (10) eine erste und eine zweite Flachseite (16, 18) aufweisen, die einander gegenüberliegen und die senkrecht zu der ersten Ebene ausgerichtet sind,
wobei die Stableiter (10) eine weitere erste und eine weitere zweite Flachseite (20, 22) aufweisen, die einander gegenüberliegen und die senkrecht zu der zweiten Ebene ausgerichtet sind,
und wobei die Geradheit in der ersten und der zweiten Ebene jeweils mit einem Verfahren nach einem der vorhergehenden Ansprüche bestimmt wird.

8. Verfahren nach Anspruch 7, **dadurch gekennzeichnet, dass** die erste und die zweite Flachseite (16, 18) einen anderen Abstand voneinander aufweisen als die weitere erste und die weitere zweite Flachseite (20, 22).

9. Verfahren nach Anspruch 7 oder 8, **dadurch gekennzeichnet, dass** ein jeder der Stableiter (10) zwischen dem Ermitteln der Durchbiegungen (36a-36d) jeweils um 90° um seine Längsachse (12) gedreht wird.

10. Messstation (30) zum Bestimmen der Geradheit von Stableitern (10) mit zwei einander gegenüberliegenden Flachseiten (16,18), aufweisend
- zwei voneinander beabstandete Auflagen (32, 34);
- eine zwischen den Auflagen (32, 34) angeordnete Messeinrichtung (52), insbesondere eine Lasermesseinrichtung, zum Bestimmen einer Durchbiegung (36) eines auf die Auflagen (32, 34) aufgelegten Stableiters (10);
- eine Auswerteeinrichtung (54), die dazu eingerichtet ist, eine Abweichung der Durchbiegung (36) von einer nominellen Durchbiegung zu ermitteln;
wobei die Auswerteeinrichtung (54) weiterhin dazu eingerichtet ist, die nominelle Durchbiegung als einen Mittelwert wenigstens einer ersten und wenigstens einer zweiten Durchbiegung (36a, 36b) bei Auflage wenigstens eines ersten Stableiters (10) mit einer ersten bzw. zweiten Flachseite (16, 18) auf den Auflagen (32, 34) zu ermitteln.

11. Messstation (30) nach Anspruch 10, **dadurch gekennzeichnet, dass** eine Wendeeinrichtung (56) zum Drehen der Stableiter (10) um ihre Längsachse (12) vorgesehen ist, insbesondere wobei die Wendeeinrichtung (56) dazu eingerichtet ist, die Stableiter (10) beim Drehen anzuheben.

12. Messstation (30) nach Anspruch 11, **dadurch gekennzeichnet, dass** die Wendeeinrichtung (56) in Längsrichtung verfahrbar ist.

13. Messstation (30) nach einem der Ansprüche 10 bis 12, **dadurch gekennzeichnet, dass** ein Anschlag (70) für die Stableiter (10) vorgesehen ist.

14. Messstation (30) nach einem der Ansprüche 10 bis 13, **dadurch gekennzeichnet, dass** ein Abstand (35) der beiden Auflagen (32, 34) zueinander einstellbar ist, insbesondere wobei eine der Auflagen (32) feststehend angeordnet ist und die andere Auflage (34) verschieblich ist.

15. Messstation (30) nach Anspruch 14, **dadurch gekennzeichnet, dass** die Messeinrichtung (52) relativ zu der feststehenden Auflage (32) verschieblich ist, insbesondere wobei Verschiebungen der verschieblichen Auflage (34) und der Messeinrichtung (52) gekoppelt sind, und wobei ein Verschiebweg der Messeinrichtung (52) der Hälfte des Verschiebewegs der verschieblichen Auflage (34) entspricht.

16. Messstation (30) nach einem der Ansprüche 10 bis 15, **dadurch gekennzeichnet, dass** zwischen den Auflagen (32, 34) ein in vertikaler Richtung feststehendes Referenzstück (38) angeordnet ist.

17. Messstation (30) nach einem der Ansprüche 10 bis 16, **dadurch gekennzeichnet, dass** die Messstation (30) einen Zwischenspeicher (60) für Stableiter (10) aufweist, und dass die Messstation (30) eine Fördereinrichtung (64) aufweist, um Stableiter (10) von den Auflagen (32, 34) in den Zwischenspeicher (60) zu verbringen.

## Claims

1. Method for determining the straightness of bar conductors (10) having a first and a second flat side (16, 18), which are opposite each other, wherein the bar conductors (10) are each placed with their first flat side (16) on two spaced-apart supports (32, 34) and a first deflection (36a) of each bar conductor (10) between the supports (32, 34) is determined,
wherein at least one first of the bar conductors (10) is also placed with its second flat side (18) on the supports (32, 34) and a second deflection (36b) of the first bar conductor (10) between the supports (32, 34) is determined,
wherein a nominal deflection is defined by an average of the first and second deflections (36a, 36b),
and wherein, for each bar conductor (10), a deviation of the first deflection (36a) from the nominal deflection is ascertained as a measure of the straightness.

2. Method according to claim 1, **characterized in that** the nominal deflection is ascertained using a plurality of first bar conductors (10).

3. Method according to claim 1 or 2, **characterized in that** second bar conductors (10) are placed only with their first flat side (16) on the supports (32, 34) and, for the second bar conductors (10), only the first deflection (36a) is ascertained and compared with the nominal deflection in each case.

4. Method according to claim 1, **characterized in that** each of the bar conductors (10) is placed with the first and the second flat side (16, 18) on the supports (32, 34) and the first and the second deflection (36a, 36b) are determined in each case, in particular the deviation from the nominal deflection being ascertained by halving the deviation between the first and the second deflection (36a, 36b).

5. Method according to any of the preceding claims, **characterized in that** the deflections (36a, 36b) are determined without contact, in particular by means of a laser measuring device.

6. Method according to any of the preceding claims, **characterized in that** the deflections (36a, 36b) are determined on the basis of a distance (42) of each bar conductor (10) from a reference piece (38) which is fixed in the vertical direction.

7. Method for determining the straightness of bar conductors (10) in a first and a second plane,
wherein the bar conductors (10) have a first and a second flat side (16, 18), which are opposite each other and are oriented perpendicularly to the first plane,
wherein the bar conductors (10) have a further first and a further second flat side (20, 22), which are opposite each other and are oriented perpendicularly to the second plane,
and wherein the straightness in the first and the second plane is determined in each case by a method according to any of the preceding claims.

8. Method according to claim 7, **characterized in that** the first and the second flat side (16, 18) have a different distance from each other than the further first and the further second flat side (20, 22).

9. Method according to claim 7 or 8, **characterized in that** each of the bar conductors (10) is rotated by 90° about its longitudinal axis (12) between ascertaining the deflections (36a-36d).

10. Measuring station (30) for determining the straightness of bar conductors (10) having two flat sides (16,18), which are opposite each other, the measuring station having
- two spaced-apart supports (32, 34);
- a measuring device (52), in particular a laser measuring device, which is arranged between the supports (32, 34), for determining a deflection (36) of a bar conductor (10) placed on the supports (32, 34);
- an evaluation device (54) which is designed to ascertain a deviation of the deflection (36) from a nominal deflection;
wherein the evaluation device (54) is further designed to ascertain the nominal deflection as an average of at least a first and at least a second deflection (36a, 36b) when at least one first bar conductor (10) is supported with a first or second flat side (16, 18) on the supports (32, 34).

11. Measuring station (30) according to claim 10, **characterized in that** a turning device (56) is provided for rotating the bar conductors (10) about their longitudinal axis (12), in particular the turning device (56) being designed to lift the bar conductors (10) during rotation.

12. Measuring station (30) according to claim 11, **characterized in that** the turning device (56) can be moved in the longitudinal direction.

13. Measuring station (30) according to any of claims 10 to 12, **characterized in that** a stop (70) is provided for the bar conductors (10).

14. Measuring station (30) according to any of claims 10 to 13, **characterized in that** a distance (35) between the two supports (32, 34) can be adjusted, in particular one of the supports (32) being fixed and the other support (34) being movable.

15. Measuring station (30) according to claim 14, **characterized in that** the measuring device (52) is movable relative to the fixed support (32), in particular movements of the movable support (34) and the measuring device (52) being coupled, and a movement distance of the measuring device (52) corresponding to half the movement distance of the movable support (34).

16. Measuring station (30) according to any of claims 10 to 15, **characterized in that** a reference piece (38) which is fixed in the vertical direction is arranged between the supports (32, 34).

17. Measuring station (30) according to any of claims 10 to 16, **characterized in that** the measuring station (30) has an intermediate store (60) for bar conductors (10), and **in that** the measuring station (30) has a conveying device (64) to bring bar conductors (10) from the supports (32, 34) to the intermediate store (60).

## Revendications

1. Procédé pour déterminer la rectitude de barres omnibus (10) comportant une première et une deuxième face plate (16, 18), qui se font face, les barres omnibus (10) étant chacune posées avec la première face plate (16) sur deux supports (32, 34) espacés l'un de l'autre, et une première flèche (36a) de chaque barre omnibus (10) entre les supports (32, 34) étant déterminée,
au moins une première des barres omnibus (10) étant également posée avec la deuxième face plate (18) sur les supports (32, 34), et une deuxième flèche (36b) de la première barre omnibus (10) entre les supports (32, 34) étant déterminée,
une flèche nominale étant définie par une valeur moyenne des première et deuxième flèches (36a, 36b),
et un écart de la première flèche (36a) par rapport à la flèche nominale étant déterminé pour chaque barre omnibus (10) comme une mesure de la rectitude.

2. Procédé selon la revendication 1, **caractérisé en ce que** la flèche nominale est déterminée sur la base d'une pluralité de premières barres omnibus (10).

3. Procédé selon la revendication 1 ou 2, **caractérisé en ce que** des deuxièmes barres omnibus (10) sont uniquement posées avec leur première face plate (16) sur les supports (32, 34), et pour les deuxièmes barres omnibus (10), seule la première flèche (36a) est déterminée et comparée à la flèche nominale.

4. Procédé selon la revendication 1, **caractérisé en ce que** chacune des barres omnibus (10) est posée avec la première et la deuxième face plate (16, 18) sur les supports (32, 34), et la première et la deuxième flèche (36a, 36b) sont déterminées respectivement, notamment l'écart par rapport à la flèche nominale étant déterminé par la moitié de l'écart entre la première et la deuxième flèche (36a, 36b).

5. Procédé selon l'une des revendications précédentes, **caractérisé en ce que** les flèches (36a, 36b) sont déterminées sans contact, notamment au moyen d'un dispositif de mesure laser.

6. Procédé selon l'une des revendications précédentes, **caractérisé en ce que** les flèches (36a, 36b) sont déterminées sur la base d'une distance (42) de chaque barre omnibus (10) par rapport à une pièce de référence (38) fixe en direction verticale.

7. Procédé pour déterminer la rectitude de barres omnibus (10) dans un premier et un deuxième plan,
les barres omnibus (10) comportant une première et une deuxième face plate (16, 18) qui se font face et qui sont orientées perpendiculairement au premier plan,
les barres omnibus (10) comportant une autre première et une autre deuxième face plate (20, 22) qui se font face et qui sont orientées perpendiculairement au deuxième plan,
et la rectitude dans le premier et le deuxième plan étant déterminée respectivement par un procédé selon l'une des revendications précédentes.

8. Procédé selon la revendication 7, **caractérisé en ce que** la première et la deuxième face plate (16, 18) présentent une distance différente l'une de l'autre que l'autre première et l'autre deuxième face plate (20, 22).

9. Procédé selon la revendication 7 ou 8, **caractérisé en ce que** chacune des barres omnibus (10) est tournée de 90° autour de son axe longitudinal (12) entre la détermination des flèches (36a-36d).

10. Station de mesure (30) pour déterminer la rectitude de barres omnibus (10) comportant deux faces plates (16,18) se faisant face, comportant
- deux supports (32, 34) espacés l'un de l'autre ;
- un dispositif de mesure (52) disposé entre les supports (32, 34), notamment un dispositif de mesure laser, pour déterminer une flèche (36) d'une barre omnibus (10) posée sur les supports (32, 34) ;
- un dispositif d'évaluation (54) conçu pour déterminer un écart de la flèche (36) par rapport à une flèche nominale ; le dispositif d'évaluation (54) étant en outre conçu pour déterminer la flèche nominale comme une valeur moyenne d'au moins une première et au moins une deuxième flèche (36a, 36b) lors du support d'au moins une première barre omnibus (10) avec une première ou une deuxième face plate (16, 18) sur les supports (32, 34).

11. Station de mesure (30) selon la revendication 10, **caractérisée en ce qu'**un dispositif de retournement (56) pour tourner les barres omnibus (10) autour de leur axe longitudinal (12) est prévu, notamment le dispositif de retournement (56) étant conçu pour soulever les barres omnibus (10) lors du tournement.

12. Station de mesure (30) selon la revendication 11, **caractérisée en ce que** le dispositif de retournement (56) est déplaçable en direction longitudinale.

13. Station de mesure (30) selon l'une des revendications 10 à 12, **caractérisée en ce qu'**une butée (70) pour les barres omnibus (10) est prévue.

14. Station de mesure (30) selon l'une des revendications 10 à 13, **caractérisée en ce qu'**une distance (35) entre les deux supports (32, 34) est réglable, notamment un des supports (32) étant disposé fixe et l'autre support (34) étant mobile.

15. Station de mesure (30) selon la revendication 14, **caractérisée en ce que** le dispositif de mesure (52) est mobile par rapport au support fixe (32), notamment les déplacements du support mobile (34) et du dispositif de mesure (52) étant couplés, et une course de déplacement du dispositif de mesure (52) correspondant à la moitié de la course de déplacement du support mobile (34).

16. Station de mesure (30) selon l'une des revendications 10 à 15, **caractérisée en ce qu'**une pièce de référence (38) fixe en direction verticale est disposée entre les supports (32, 34).

17. Station de mesure (30) selon l'une des revendications 10 à 16, **caractérisée en ce que** la station de mesure (30) comporte une mémoire tampon (60) pour barres omnibus (10), et que la station de mesure (30) comporte un dispositif de transport (64) pour transférer les barres omnibus (10) des supports (32, 34) dans la mémoire tampon (60).
